# EUROPÄISCHE PATENTANMELDUNG

(11) **EP 3 808 492 A1**
(43) Veröffentlichungstag der Anmeldung: **21.04.2021**
(21) Anmeldenummer: 20195177.9
(22) Anmeldetag: 09.09.2020
(51) Int. Cl.: B23K 11/20, B23K 11/25, B23K 11/11, B23K 31/12, B23K 101/36, B23K 101/00

(54) **VERFAHREN ZUM ÜBERPRÜFEN DER QUALITÄT BEI EINEM WIDERSTANDSSCHWEISSEN VON WERKSTÜCKEN**

(30) Priorität: 16.10.2019 DE 102019215884
(71) Anmelder: Robert Bosch GmbH, 70442 Stuttgart (DE)
(72) Erfinder: Haeufgloeckner, Juergen, 63936 Schneeberg (DE)

(57) **Zusammenfassung**

Die Erfindung betrifft ein Verfahren zum Überprüfen der Qualität bei einem Widerstandsschweißen von Werkstücken (121, 122), wobei Schweißelektroden (111, 112) mit Hilfe eines Elektrodenantriebs (130) gegen einen Schweißpunkt (125) der Werkstücke (121, 122) gepresst werden und im Zuge eines Schweißprozesses mit einem Schweißstrom bestromt werden, wobei nach einem Ende der Bestromung der Schweißelektroden ein zeitlicher Verlauf eines Antriebsparameters des Elektrodenantriebs (130) bestimmt wird und eine Qualität des Schweißprozesses in Anhängigkeit von dem bestimmten zeitlichen Verlauf des Antriebsparameters beurteilt wird.

## Beschreibung

### Beschreibung

Die vorliegende Erfindung betrifft ein Verfahren zum Überprüfen der Qualität bei einem Widerstandsschweißen von Werkstücken sowie eine Steuereinheit, ein Schweißgerät und ein Computerprogramm zu dessen Durchführung.

### Stand der Technik

Mittels Schweißprozessen wie beispielsweise dem Widerstandsschweißen können Werkstücke stoffschlüssig miteinander verbunden werden. Beispielsweise werden im Zuge des automatisierten Karosserierohbaus durch robotergeführte Schweißzangen unterschiedliche Werkstücke, z.B. Bleche, mittels Widerstandsschweißen miteinander verschweißt.

Im Zuge des Widerstandsschweißens werden zunächst im Zuge einer sog. Kraftaufbauphase zwei Schweißelektroden einer Schweißzange mit Hilfe eines Elektrodenantriebs gegen einen Schweißpunkt der Werkstücke gepresst, bis eine vorgegebene Elektrodenkraft erreicht ist. Anschließend erfolgt der eigentliche Schweißprozess, im Zuge dessen die Schweißelektroden für die Dauer einer Schweißzeit bzw. Stromzeit mit einem Schweißstrom bestromt werden, wodurch eine Widerstandserwärmung der beiden zu verschweißenden Werkstücke zwischen den Schweißelektroden erfolgt und die Werkstücke bis zum Erreichen einer erforderlichen Schweißtemperatur erhitzt werden. Nach dem Ende der Schweißzeit und nachdem die Bestromung der Schweißelektroden beendet wurde, erfolgt die sog. Nachhaltephase, während welcher die Schweißelektroden noch mit der Elektrodenkraft gegen den Schweißpunkt der Werkstücke gepresst, aber nicht mehr mit dem Schweißstrom bestromt werden.

### Offenbarung der Erfindung

Vor diesem Hintergrund werden ein Verfahren zum Überprüfen der Qualität bei einem Widerstandsschweißen von Werkstücken sowie eine Steuereinheit, ein Schweißgerät und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Schweißelektroden werden mit Hilfe eines Elektrodenantriebs mit einer Elektrodenkraft gegen einen Schweißpunkt der Werkstücke gepresst und im Zuge eines Schweißprozesses werden die Schweißelektroden mit einem Schweißstrom bestromt. Die Schweißstromstärke kann zu Beginn des Schweißprozesses im Zuge einer sog. Stromaufbauphase bis zu einem vorgegebenen Wert erhöht werden und am Ende des Schweißprozesses im Zuge einer sog. Stromabbauphase bis auf den Wert Null verringert werden.

Im Rahmen des vorliegenden Verfahrens wird nach einem Ende der Bestromung der Schweißelektroden ein zeitlicher Verlauf eines Antriebsparameters des Elektrodenantriebs bestimmt und eine Qualität des Schweißprozesses wird in Anhängigkeit von dem bestimmten zeitlichen Verlauf des Antriebsparameters beurteilt. Zweckmäßigerweise werden die Schweißelektroden noch weiter gegen den Schweißpunkt der Werkstücke gepresst, während der zeitliche Verlauf des Antriebsparameters bestimmt wird. Insbesondere wird der zeitliche Verlauf während der sog. Nachhaltephase bzw. Nachhaltezeit bestimmt oder während eines stromlosen Zeitraums nach einer Hauptstromzeit und vor der Nachhaltezeit.

Der Erfindung liegt die Erkenntnis zugrunde, dass aus dem Verlauf der Antriebsparameter, welche im Rahmen der Regelung bzw. Steuerung des Elektrodenantriebs nach Ende der Bestromung bestimmt werden, auf die Qualität der Schweißverbindung geschlossen werden kann. Herkömmlicherweise wird die Schweißprozessqualität zumeist in Abhängigkeit von elektrischen Messgrößen wie der Schweißstromstärke bewertet, welche während der Schweißzeit erfasst werden, also während die Elektroden bestromt werden. Im Rahmen der Erfindung wurde erkannt, dass sich spezielle Ereignisse und Eigenschaften des Schweißprozesses spezifisch auf den zeitlichen Verlauf von Antriebsparametern des Elektrodenantriebs nach dem Ende der Bestromung der Schweißelektroden auswirken und dass derartige zeitliche Verläufe daher besonders geeignet sind, um die Schweißprozessqualität beurteilen zu können. Durch die vorliegende Erfindung wird auch der Zeitbereich nach der Schweiß- bzw. Stromzeit mit in die Qualitätsbewertung einbezogen.

Nach der Bestromung der Schweißelektroden kühlt der Schweißpunkt ab. Die Schweißlinse verfestigt sich und die Wärmeausdehnung verringert sich. Diese Verringerung der Wärmeausdehnung führt üblicherweise dazu, dass sich die Schweißelektroden am Schweißpunkt aufeinander zu bewegen, was sich in dem zeitlichen Verlauf bestimmter Antriebsparameter widerspiegelt, von welchen auf die aktuelle Lage bzw. Position der Schweißelektroden rückgeschlossen werden kann.

Als Antriebsparameter seien in diesem Zusammenhang insbesondere Größen bzw. Parameter zu verstehen, welche im Zuge einer Regelung bzw. Steuerung des Elektrodenantriebs bestimmt werden, um die Schweißelektroden auf vorgegebene Weise zu bewegen und gegen die Werkstücke zu pressen. Insbesondere charakterisieren die Antriebsparameter eine aktuelle Lage bzw. Position oder Bewegung der Schweißelektroden. Von aktuellen Werten bzw. zeitlichen Verläufen der Antriebsparameter kann zweckmäßigerweise auf die aktuelle Lage der Schweißelektroden rückgeschlossen werden und davon ausgehend wiederum auf den Schweißprozess bzw. Eigenschaften der Werkstücke. Daher bieten sich die Antriebsparameter besonders für die Qualitätsbeurteilung des Schweißprozesses an.

Durch die Auswertung des zeitlichen Verlaufs des Antriebsparameters werden eine präzise Beurteilung der Qualität der Schweißpunkte und eine verbesserte Schweißprozessüberwachung ermöglicht, ohne dass zusätzliche Hardware benötigt wird, insbesondere ohne zusätzliche Sensoren. Durch Vermeidung zusätzlicher Sensoren können somit erhöhte Kosten, höhere Ausfallwahrscheinlichkeiten sowie erhöhter Installations- und Wartungsaufwand vermieden werden.

Gemäß einer besonders vorteilhaften Ausführungsform der Erfindung wird die Qualität des Schweißprozesses in Abhängigkeit von einer Steigung und/oder einem Absolutwert des zeitlichen Verlaufs des Antriebsparameters beurteilt. Bei dem Absolutwert kann es sich insbesondere um einen Maximalwert oder einen Endwert des zeitlichen Verlaufs handeln. Insbesondere erlauben die Steigung und Absolutwert des zeitlichen Verlaufs zweckmäßigerweise Rückschlüsse darüber, wie sich die Lage bzw. Position der Schweißelektroden während des Abkühlens des Schweißpunkts verändert. Soweit der Verlauf des Antriebsparameters nicht linear ist, wird die Steigung vorzugsweise aus einer Ausgleichsgeraden ermittelt.

Vorteilhafterweise wird der zeitliche Verlauf des Antriebsparameters mit einem Referenzverlauf verglichen und die Qualität des Schweißprozesses wird in Abhängigkeit von diesem Vergleich beurteilt. Dieser Referenzverlauf repräsentiert zweckmäßigerweise den zeitlichen Verlauf des Antriebsparameters bei einem Referenzschweißprozess mit guter Qualität, bei welchem insbesondere keine Störungen oder Schweißspritzer auftreten. Zweckmäßigerweise wird im Zuge dieses Vergleiches überprüft, ob die Steigung und/oder der Absolutwert, beispielsweise der Maximal- oder Endwert des zeitlichen Verlaufs mit einer Steigung bzw. einem Absolutwert des Referenzverlaufs übereinstimmen bzw. im Wesentlichen übereinstimmen. Weicht die Steigung bzw. der Absolutwert des zeitlichen Verlaufs von der entsprechenden Steigung bzw. dem entsprechenden Absolutwert des Referenzverlaufs um weniger als einen vorgegebenen Schwellwert ab, wird die Qualität des Schweißprozesses zweckmäßigerweise als gut beurteilt. Überschreitet diese Abweichung hingegen den vorgegebenen Schwellwert, wird die Qualität insbesondere als schlecht beurteilt. In letzterem Fall kann ferner insbesondere anhand der konkret vorliegenden Abweichung auf einen konkreten Fehler bzw. eine konkrete Störung während des Schweißprozesses rückgeschlossen werden, welche zu der unzureichenden Qualität geführt hat. Es versteht sich, dass für den Vergleich unterschiedlicher Größen (z.B. Absolutwert und Steigung) auch unterschiedliche Schwellwerte vorgesehen sein können.

Gemäß einer besonders bevorzugten Ausführungsform wird der zeitliche Verlauf eines Lageistwerts einer oder beider Schweißelektroden bestimmt. Als Lageistwert sei dabei insbesondere die aktuelle Lage bzw. Position einer oder beider Schweißelektroden oder eines die Schweißelektrode(n) bewegenden Antriebs zu verstehen. Beispielsweise kann der Lageistwert relativ zu dem Schweißpunkt bzw. den Werkstücken bestimmt werden oder zweckmäßigerweise auch in Relation zu einem Referenzpunkt des Schweißgeräts, insbesondere zu einer Ruhelage der Schweißelektroden bzw. des Antriebs. Insbesondere charakterisiert die Lage bzw. der Lageistwert die Position der Elektrodenkappen im Raum. Ferner wird insbesondere nur eine Achse betrachtet, zweckmäßigerweise eine Achse in Bewegungsrichtung der Elektroden, welche durch einen Lageistwert eines die Elektroden öffnenden und schließenden Antriebs gegeben sein kann.

Die Abkühlung des Schweißpunkts und die Verringerung der Wärmeausdehnung nach dem Ende der Bestromung führen insbesondere dazu, dass die Schweißelektroden aufeinander zu bzw. weiter auf die Werkstücke zu bewegt werden. Der sich so ergebende zeitliche Verlauf des Lageistwerts, insbesondere dessen Steigung und Absolutwert, unterscheidet sich bei einem Schweißprozess mit guter Qualität von einem Schweißprozess mit schlechter Qualität. Der Lageistwert stellt daher einen besonders vorteilhaften Antriebsparameter dar, um auf die Qualität des Schweißprozesses rückzuschließen und um insbesondere Schweißspritzer und Störungen zu erkennen. Besonders zweckmäßig werden zur Beurteilung der Qualität die Steigung und/oder der Absolutwert des zeitlichen Verlaufs des Lageistwerts mit einer Steigung bzw. einem Absolutwert eines entsprechenden Referenzverlaufs verglichen.

Alternativ oder zusätzlich wird vorzugsweise der zeitliche Verlauf eines Drehmoments bzw. Drehmomentistwerts und/oder einer Drehzahl bzw. eines Drehzahlistwerts des Elektrodenantriebs bestimmt. Ein Motor des Elektrodenantriebs, beispielsweise ein Servomotor, gibt in Abhängigkeit von seiner Drehzahl insbesondere ein entsprechendes Drehmoment an eine Antriebsspindel des Elektrodenantriebs ab, wodurch die Schweißelektroden mit einer entsprechenden Zangenschließgeschwindigkeit bewegt werden. Dadurch stellt sich abhängig von mechanischen Parametern insbesondere eine gewisse Kraft ein, deren Istwert zweckmäßigerweise auf einen Sollwert geregelt wird, wozu insbesondere der Drehmomentistwert entsprechend verändert wird.

Drehmoment bzw. Drehzahl stellen zweckmäßige Antriebsparameter dar, um auf die Lage bzw. Position der Schweißelektroden rückzuschließen und um Eigenschaften und Gegebenheiten des Schweißprozesses zu bewerten. Unterschiedliche Störungen und Schweißspritzer führen jeweils insbesondere zu charakteristischen Veränderungen des Drehmomentistwerts und des Drehzahlistwerts, z.B. jeweils zu einem Anstieg mit charakteristischer Steigung.

Bevorzugt wird im Zuge der Beurteilung der Qualität des Schweißprozesses eine Erkennung von Störungen durchgeführt. Unterschiedliche Störungen bzw. Fehler während des Schweißprozesses wirken sich jeweils insbesondere unterschiedlich auf den zeitlichen Verlauf des Antriebsparameters aus. Anhand von charakteristischen Veränderungen des zeitlichen Verlaufs, insbesondere anhand von charakteristischen Abweichungen des zeitlichen Verlaufs von dem Referenzverlauf, kann daher auf entsprechende Störungen des Schweißprozesses rückgeschlossen werden. Derartige Störungen können beispielsweise Kappenverschleiß, Blechstreuungen, Klebstoff, Fräsprobleme, Kraftschwankungen, Spalt, ungünstige Kühlung oder Nebenschluss (d.h. Fluss des Schweißstroms nicht vollständig durch den Schweißpunkt) umfassen.

Vorteilhafterweise wird im Zuge der Beurteilung der Qualität des Schweißprozesses eine Erkennung von Schweißspritzern durchgeführt. Als Schweißspritzer seien in diesem Zusammenhang Tropfen geschmolzenen Metalls zu verstehen, die aufgrund der extremen Intensität von Hitze und Kraft, die während des Schweißprozesses an oder um den Schweißpunkt herum aufgebracht werden, ausbrechen. Derartige Schweißspritzer können die Schweißqualität negativ beeinflussen und zur Verschmutzung von metallischen Oberflächen führen, insbesondere den Werkstückoberflächen und den Oberflächen des Schweißgeräts selbst, beispielsweise Elektrodenkappen. Schweißspritzer während des Schweißprozesses wirken sich charakteristisch auf die Lage bzw. Position der Schweißelektroden nach dem Ende der Bestromung aus, insbesondere als Stufen im Verlauf. Durch Auswerten des zeitlichen Verlaufs des Antriebsparameters nach Ende des Schweißprozesses können Schweißspritzer präzise erkannt werden und derartigen negativen Einflüssen kann zweckmäßigerweise durch Veränderung der Schweißparameter entgegenwirkt werden.

Vorzugsweise wird eine vorgegebene Maßnahme durchgeführt, wenn im Zuge der Beurteilung der Qualität des Schweißprozesses eine unzureichende Qualität des Schweißprozesses, wie z.B. ein Schweißspritzer erkannt wird. Beispielsweise kann als derartige Maßnahme eine Regelung des Schweißprozesses angepasst werden, d.h. Schweißparameter wie Elektrodenkraftverlauf und Schweißstromverlauf verändert werden, um bei nachfolgend durchgeführten Schweißprozessen entsprechenden negativen Einflüssen entgegenzuwirken.

Bevorzugt sind die Werkstücke aus Aluminium und/oder Stahl. Die Werkstücke können dabei beispielsweise dünne Bleche mit einer Dicke von insbesondere bis zu 1 mm sein. Ein Widerstandsschweißen derartiger Werkstücke stellt besonders schwierige Anwendungsfälle für eine präzise Schweißprozessregelung dar. Durch das vorliegende Verfahren kann die Qualität des Schweißprozesses in derartigen schwierigen Anwendungsfällen präzise beurteilt werden.

Besonders vorteilhaft eignet sich das Verfahren für den Karosserierohbau, insbesondere für automatisierte Schweißprozesse im Karosserierohbau, vorzugsweise im Zuge einer Kraftfahrzeugproduktion. Insbesondere werden dabei Bleche miteinander verschweißt, um die Karosserie eines Kraftfahrzeugs herzustellen. Im Zuge des Herstellungsprozesses einer einzigen Karosserie können bis zu mehrere tausend Schweißpunkte (z.B. ca. 5.000 Schweißpunkte für ein Mittelklasse-Fahrzeug) automatisiert bearbeitet werden. Durch das Verfahren kann präzise die Qualität der einzelnen Schweißpunkte beurteilt werden.

Eine erfindungsgemäße Steuereinheit (Recheneinheit), z.B. eine Schweißsteuerung eines Schweißgeräts, ist, insbesondere programmtechnisch, dazu eingerichtet, ein erfindungsgemäßes Verfahren durchzuführen. Die Steuereinheit bzw. Schweißsteuerung kann beispielsweise als SPS (speicherprogrammierbare Steuerung), als NC (Numerical Control) oder CNC (Computerised Numerical Control) ausgebildet sein.

Ein erfindungsgemäßes Schweißgerät zum Widerstandsschweißen weist insbesondere eine Schweißzange mit Schweißelektroden sowie einen Elektrodenantrieb zum Bewegen der Schweißelektroden auf. Ferner umfasst das Schweißgerät eine bevorzugte Ausgestaltung einer erfindungsgemäßen Steuereinheit.

Auch die Implementierung eines erfindungsgemäßen Verfahrens in Form eines Computerprogramms mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch eine bevorzugte Ausgestaltung eines erfindungsgemäßen Schweißgeräts, das dazu eingerichtet ist, eine bevorzugte Ausführungsform eines erfindungsgemäßen Verfahrens durchzuführen.
- Figur 2: zeigt schematisch eine bevorzugte Ausführungsform eines erfindungsgemäßen Verfahrens als ein Blockdiagramm.
- Figuren 3 bis 5: zeigen jeweils schematisch zeitliche Verläufe von Parametern eines Schweißgeräts, die jeweils im Zuge einer bevorzugten Ausführungsform eines erfindungsgemäßen Verfahrens bestimmt werden können.

### Detaillierte Beschreibung der Zeichnung

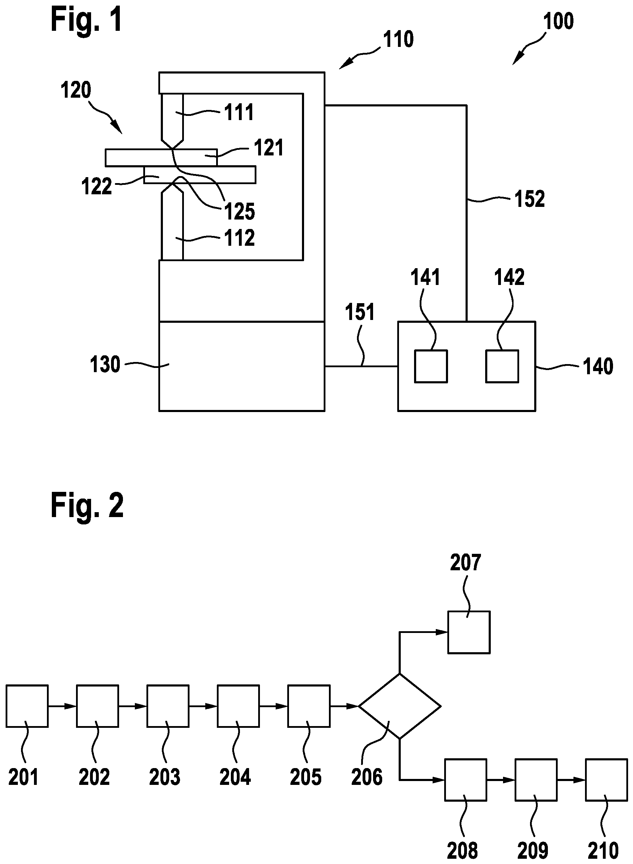

In Figur 1 ist ein Schweißgerät zum Widerstandsschweißen schematisch dargestellt und mit 100 bezeichnet.

Mit dem Schweißgerät 100 können Werkstücke 120 durch Widerstandsschweißen miteinander stoffschlüssig verbunden werden. Insbesondere werden die Werkstücke 120 im Zuge eines Karosserierohbaus miteinander verschweißt, wobei insbesondere eine Karosserie eines Kraftfahrzeugs hergestellt wird. Als Werkstücke werden hier beispielsweise zwei Bleche 121 und 122 aus Aluminium miteinander verschweißt.

Das Schweißgerät 100 weist eine Schweißzange 110 mit zwei Schweißelektroden 111 und 112 auf. Ein Elektrodenantrieb 130 ist vorgesehen, um die Schweißelektroden 111, 112 zu bewegen. In Figur 1 ist die Schweißzange 110 beispielsweise als eine servoelektrische Schweißzange dargestellt mit einem als Servomotor ausgebildeten Elektrodenantrieb 130. Ebenso ist es denkbar, dass der Elektrodenantrieb 130 beispielsweise als Elektromotor, Hydraulikmotor oder Pneumatikmotor ausgebildet sein kann.

Im Zuge des Widerstandsschweißens werden während einer sog. Kraftaufbauphase die Schweißelektroden 111 und 112 mit Hilfe des Elektrodenantriebs 130 mit einer Elektrodenkraft an einem Schweißpunkt 125 gegen die Bleche 121 und 122 gedrückt. Anschließend werden die Schweißelektroden 111 und 112 während des eigentlichen Schweißprozesses für die Dauer einer Schweißzeit mit einem Schweißstrom bestromt, wodurch eine Widerstandserwärmung der Bleche 121 und 122 am Schweißpunkt 125 erfolgt und es zu einem Verflüssigen der Werkstücke 121, 122 im Schweißpunkt 125 kommt.

Nach dem Ende der Schweißzeit und nachdem die Bestromung der Schweißelektroden 111, 112 beendet wurde, werden die Schweißelektroden 111, 112 im Zuge einer sog. Nachhaltephase noch mit der Elektrodenkraft gegen den Schweißpunkt 125 der Werkstücke 121, 122 gepresst, aber nicht mehr mit dem Schweißstrom bestromt.

Ferner weist das Schweißgerät 100 eine Steuereinheit (Schweißsteuerung) 140 auf, welche beispielsweise als SPS (speicherprogrammierbare Steuerung) ausgebildet sein kann. Die Steuereinheit 140 ist dazu eingerichtet, den Elektrodenantrieb 130 zu regeln, angedeutet durch Bezugszeichen 151, und ferner den Schweißprozess, angedeutet durch Bezugszeichen 152. Zu diesem Zweck werden in der Steuereinheit 140 eine entsprechende Antriebsregelung 141 und eine entsprechende Schweißprozessregelung 142 durchgeführt, welche jeweils als entsprechende Steuerungsprogramme oder auch als ein gemeinsames Steuerungsprogramm implementiert sein können.

Die Steuereinheit 140 ist ferner dazu eingerichtet, eine Qualität des Schweißprozesses bzw. des erzeugten Schweißpunkts 125 zu beurteilen. Zu diesem Zweck ist die Steuereinheit 140, insbesondere programmtechnisch, dazu eingerichtet, eine bevorzugte Ausführungsform eines erfindungsgemäßen Verfahrens durchzuführen, welche in Figur 2 schematisch als ein Blockdiagramm dargestellt ist und nachfolgend in Bezug auf die Figuren 1 und 2 erläutert wird.

Schritt 201 bezeichnet die Kraftaufbauphase, im Zuge derer die Schweißelektroden 111 und 112 mit Hilfe des Elektrodenantriebs 130 an dem Schweißpunkt 125 gegen die Bleche 121 und 122 gedrückt werden, bis die vorgegebene Elektrodenkraft erreicht ist.

Schritt 202 bezeichnet eine sog. Vorhaltephase, während welcher die Schweißelektroden 111, 112 mit der Elektrodenkraft vor Beginn des Schweißprozesses gegen den Schweißpunkt 125 der Werkstücke 121, 122 gepresst werden, aber noch nicht mit dem Schweißstrom bestromt werden.

In Schritt 203 erfolgt der eigentliche Schweißprozess, im Zuge dessen die Schweißelektroden 111, 112 für die Dauer der Schweißzeit mit dem Schweißstrom bestromt werden. Wie erwähnt, kann der Schweißstrom währenddessen auf einen vorbestimmten Wert oder einen vorbestimmten Verlauf geregelt werden.

Nach dem Ende der Schweißzeit und nachdem die Bestromung der Schweißelektroden 111, 112 beendet wurde, erfolgt in Schritt 204 die Nachhaltephase, während welcher die Schweißelektroden 111, 112 noch mit der Elektrodenkraft gegen den Schweißpunkt 125 der Werkstücke 121, 122 gepresst, aber nicht mehr bestromt werden.

Während dieser Nachhaltephase wird in Schritt 205 ein zeitlicher Verlauf eines Antriebsparameters des Elektrodenantriebs 130 bestimmt, beispielsweise der zeitliche Verlauf eines Lageistwerts des Elektrodenantriebs 130, welcher die aktuelle Lage der Schweißelektroden 111, 112 charakterisiert.

In Schritt 206 wird der zeitliche Verlauf des Lageistwerts ausgewertet, um eine Qualität des Schweißprozesses beurteilen zu können. Zu diesem Zweck wird der zeitliche Verlauf mit einem Referenzverlauf verglichen. Dieser Referenzverlauf repräsentiert den zeitlichen Verlauf des Lageistwerts bei einem Referenzschweißprozess mit guter Qualität ohne Störungen und Schweißspritzer.

Insbesondere werden in Schritt 206 ein Absolutwert bzw. Maximalwert und eine Steigung des in Schritt 205 bestimmten zeitlichen Verlaufs mit einem Absolut- bzw. Maximalwert und einer Steigung des Referenzverlaufs verglichen.

Weichen die Steigung und der Maximalwert des zeitlichen Verlaufs von der Steigung bzw. dem Maximalwert des Referenzverlaufs um weniger als einen vorgegebenen Schwellwert ab, wird die Qualität des Schweißprozesses in Schritt 207 als gut beurteilt.

Wenn die Steigung und der Maximalwert des zeitlichen Verlaufs hingegen von der Steigung bzw. dem Maximalwert des Referenzverlaufs um mehr als den vorgegebenen Schwellwert voneinander abweichen, wird die Qualität des Schweißprozesses in Schritt 208 als schlecht bzw. unzureichend beurteilt.

In diesem Fall wird in Schritt 209 ferner in Abhängigkeit von der konkreten Abweichung im Vergleich zu dem Referenzverlauf bestimmt, welcher konkreter Fehler während des Schweißprozesses aufgetreten ist, etwa ob eine Störung wie Blechstreuung oder Nebenschluss vorgelegen ist oder ob es während des Schweißprozesses zu einem Schweißspritzer gekommen ist.

In Schritt 210 kann eine entsprechende Gegenmaßnahme durchgeführt werden, so dass es bei nachfolgend durchgeführten Schweißprozessen nicht erneut zu der erkannten Störung wie z.B. zu Schweißspritzern kommt.

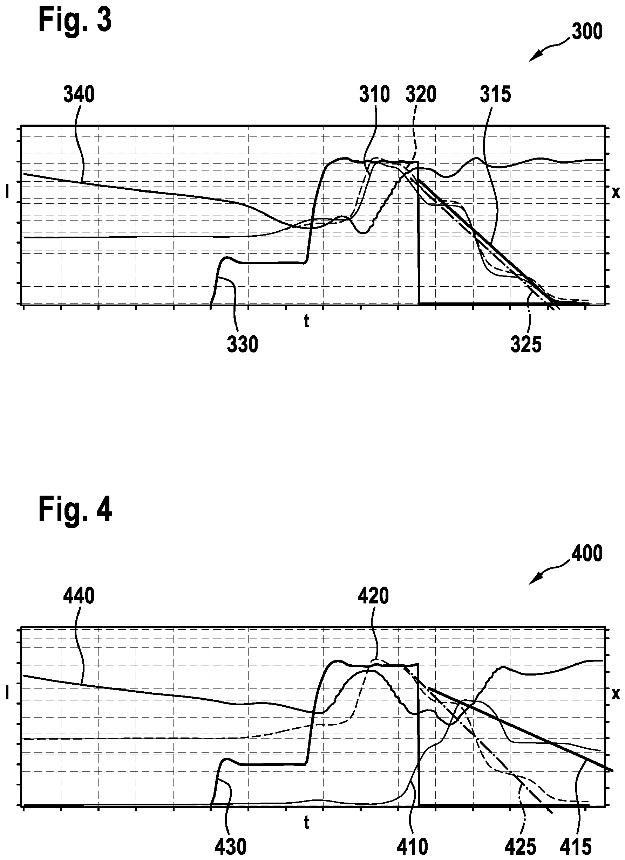

In den Figuren 3 bis 5 sind jeweils zeitliche Verläufe von Parametern eines Schweißgeräts 100 schematisch dargestellt, die im Zuge einer bevorzugten Ausführungsform eines erfindungsgemäßen Verfahrens bestimmt werden können.

In den Diagrammen 300, 400 und 500 der Figuren 3 bis 5 sind jeweils die Schweißstromstärke I bzw. die Position bzw. der Lageistwert x der Schweißelektroden gegen die Zeit t aufgetragen.

Dabei zeigen Kurven 310, 410 und 510 jeweils den zeitlichen Verlauf der Position bzw. des Lageistwerts der Schweißelektroden. Kurve 320, 420 und 520 zeigen jeweils einen Referenzverlauf für den Lageistwert bei einem fehlerfreien Referenzschweißprozess ohne Störungen und Schweißspritzer. Kurven 330, 430 und 530 zeigen jeweils den zeitlichen Verlauf der Schweißstromstärke und Kurven 340, 440 und 540 zeigen den zeitlichen Verlauf des Drehmoments des Elektrodenantriebs 130.

Figur 3 zeigt den Fall eines fehlerfreien Schweißprozesses, wobei der zeitliche Verlauf 310 des Lageistwerts im Wesentlichen mit dem Referenzverlauf 320 übereinstimmt. Wie zu erkennen ist, fällt der Verlauf der Schweißstromstärke 330 nach der Schweißzeit auf den Wert null ab. Nach diesem Ende der Bestromung der Schweißelektroden ist ferner eine Ausgleichsgerade bzw. Steigung des zeitlichen Verlaufs 310 dargestellt und mit 315 bezeichnet. Ebenso ist eine Ausgleichsgerade bzw. Steigung des Referenzverlaufs 320 dargestellt und mit 325 bezeichnet. In dem Fall eines fehlerfreien Schweißverlaufs stimmen diese Ausgleichsgeraden bzw. Steigungen 315 und 325 im Wesentlichen überein.

In Figur 4 ist der Fall eines fehlerbehafteten Schweißprozesses dargestellt, bei welchem es beispielsweise zu einem Nebenschluss kommt. Wie zu erkennen ist, weichen der zeitliche Verlauf 410 des Lageistwerts und der Referenzverlauf 420 deutlich voneinander ab. Auch deren Steigungen 415 bzw. 425 nach dem Ende der Bestromung weichen deutlich voneinander ab. Ferner ist auch der Maximalwert des zeitlichen Verlaufs 410 nach dem Ende der Bestromung deutlich niedriger als der Maximalwert des Referenzverlaufs 420.

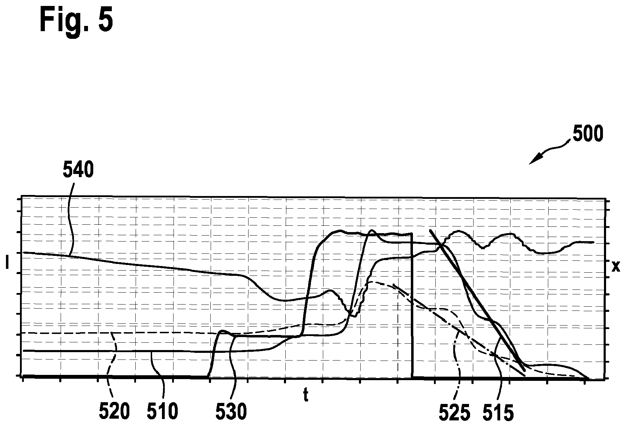

Figur 5 zeigt den Fall eines fehlerhaften Schweißprozesses mit einer Blechstreuung. Auch in diesem Fall weichen der zeitliche Verlauf 510 des Lageistwerts und der Referenzverlauf 520 deutlich voneinander ab. Auch die Steigung bzw. Ausgleichsgerade 515 des Verlaufs 510 weicht deutlich von der Steigung bzw. Ausgleichsgerade 525 des Referenzverlaufs 520 ab. Der Maximalwert des zeitlichen Verlaufs 510 nach der Bestromung ist ferner deutlich höher als der Maximalwert des Referenzverlaufs 520.

## Patentansprüche

1. Verfahren zum Überprüfen der Qualität bei einem Widerstandsschweißen von Werkstücken (121, 122), wobei Schweißelektroden (111, 112) mit Hilfe eines Elektrodenantriebs (130) gegen einen Schweißpunkt (125) der Werkstücke (121, 122) gepresst werden und im Zuge eines Schweißprozesses mit einem Schweißstrom bestromt werden (203), **dadurch gekennzeichnet, dass** nach einem Ende der Bestromung der Schweißelektroden (204) ein zeitlicher Verlauf eines Antriebsparameters (310, 410, 510) des Elektrodenantriebs (130) bestimmt wird (205) und eine Qualität des Schweißprozesses in Anhängigkeit von dem bestimmten zeitlichen Verlauf des Antriebsparameters (310, 410, 510) beurteilt wird (206).

2. Verfahren nach Anspruch 1, wobei die Qualität des Schweißprozesses in Anhängigkeit von einer Steigung (315, 415, 515) und/oder einem Absolutwert des zeitlichen Verlaufs des Antriebsparameters (310, 410, 510) beurteilt wird (206).

3. Verfahren nach Anspruch 1 oder 2, wobei der zeitliche Verlauf des Antriebsparameters (310, 410, 510) mit einem Referenzverlauf (320, 420, 520) verglichen wird und wobei die Qualität des Schweißprozesses in Abhängigkeit von diesem Vergleich beurteilt wird (206).

4. Verfahren nach einem der vorstehenden Ansprüche, wobei der zeitliche Verlauf eines Lageistwerts (310, 410, 510) einer oder beider Schweißelektroden (111, 112) als Antriebsparameter (310, 410, 510) bestimmt wird (205).

5. Verfahren nach einem der vorstehenden Ansprüche, wobei der zeitliche Verlauf eines Drehmoments (340, 440, 540) und/oder einer Drehzahl des Elektrodenantriebs (130) als Antriebsparameter (310, 410, 510) bestimmt wird.

6. Verfahren nach einem der vorstehenden Ansprüche, wobei im Zuge der Beurteilung der Qualität des Schweißprozesses eine Erkennung von Störungen durchgeführt wird (209).

7. Verfahren nach einem der vorstehenden Ansprüche, wobei im Zuge der Beurteilung der Qualität des Schweißprozesses eine Erkennung von Schweißspritzern durchgeführt wird (209).

8. Verfahren nach einem der vorstehenden Ansprüche, wobei, wenn im Zuge der Beurteilung der Qualität des Schweißprozesses eine unzureichende Qualität des Schweißprozesses erkannt wird, eine vorgegebene Maßnahme durchgeführt wird (210).

9. Verfahren nach einem der vorstehenden Ansprüche, wobei die Werkstücke (121, 122) aus Aluminium und/oder Stahlblechen gefertigt sind.

10. Steuereinheit (140), die dazu eingerichtet ist, ein Verfahren nach einem der vorstehenden Ansprüche durchzuführen.

11. Schweißgerät (100) mit einem Elektrodenantrieb (130) und mit einer Steuereinheit (140) nach Anspruch 10.

12. Computerprogramm, das eine Steuereinheit (140) veranlasst, ein Verfahren nach einem der Ansprüche 1 bis 9 durchzuführen, wenn es auf der Steuereinheit (140) ausgeführt wird.

13. Maschinenlesbares Speichermedium mit einem darauf gespeicherten Computerprogramm nach Anspruch 12.
